# EUROPEAN PATENT APPLICATION

(11) **EP 4 793 832 A1**
(43) Date of publication of application: **19.08.2026**
(21) Application number: 24876971.3
(22) Date of filing: 06.09.2024
(51) Int. Cl.: G06N 3/0455, D06H 3/00

(54) **ESTIMATION PROGRAM, INFORMATION PROCESSING DEVICE, AND ESTIMATION METHOD**

(30) Priority: 12.10.2023 JP 2023176600
(71) Applicant: TMT Machinery, Inc., Osaka-shi, Osaka 541-0041 (JP)
(72) Inventor: TSUJI, Takahiro, Kyoto-shi, Kyoto 612-8686 (JP); YOSHIDA, Kazuto, Kyoto-shi, Kyoto 612-8686 (JP)
(74) Representative: Grünecker Patent- und Rechtsanwälte PartG mbB
(86) International application number: PCT/JP2024/032055
(87) International publication number: WO 2025/079372

(57) **Abstract**

An estimation program (128) that enables estimation of a probability of occurrence of dyeing unevenness in a fully drawn yarn produced by a yarn drawing device (3) that draws a yarn while heating the yarn causes an information processing device (100) to execute: a step of obtaining an autoencoder (124) trained to compress a normal tension waveform showing a normal transition of tension of a fully drawn yarn and then restore the normal tension waveform; a step of obtaining an input tension waveform showing a transition of tension of the fully drawn yarn produced by the yarn drawing device (3); and a step of estimating the probability of occurrence of dyeing unevenness in the fully drawn yarn produced by the yarn drawing device (3) based on a degree of similarity between the input tension waveform and an output tension waveform obtained from the autoencoder (124) by inputting the input tension waveform to the autoencoder (124).

## Description

### Technical Field

The present disclosure relates to an estimation program, an information processing device, and an estimation method.

### Background Art

Dyeing unevenness may occur in a fully drawn yarn (FDY) that has been subjected to a drawing process. Dyeing unevenness significantly affects the commercial value of the yarn. Therefore, a dyeing test for determining in advance a likelihood of occurrence of dyeing unevenness has been conventionally conducted. In the dyeing test, a sample obtained by circularly knitting a yarn, which is the target of the determination, is actually dyed and the dyed state of the sample is determined as described in JP 2015-212924A (Patent Document 1).

### Citation List

### Patent Document

[Patent Document 1] JP 2015-212924A

### Summary of Invention

### Technical Problem

The dyeing test for determining the likelihood of occurrence of dyeing unevenness is conducted for all packages that are formed by winding a fully drawn yarn onto bobbins in a device for producing a fully drawn yarn. That is to say, in the dyeing test, all the packages are subjected to a step of actually dyeing the yarn. Accordingly, a huge number of steps are performed in the dyeing test. Therefore, there is demand for a technique for estimating the likelihood of occurrence of dyeing unevenness without conducting the dyeing test on a produced fully drawn yarn.

### Solution to Problem

An example of the present disclosure provides an estimation program that enables estimation of a probability of occurrence of dyeing unevenness in a fully drawn yarn produced by a yarn drawing device that draws a yarn while heating the yarn. The estimation program causes an information processing device to execute: a step of obtaining an autoencoder trained to compress a normal tension waveform showing a normal transition of tension of a fully drawn yarn that is different from the fully drawn yarn produced by the yarn drawing device, and then restore the normal tension waveform; a step of obtaining an input tension waveform showing a transition of tension of the fully drawn yarn produced by the yarn drawing device; and a step of estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.

This estimation program makes it possible to estimate the probability of occurrence of dyeing unevenness in the fully drawn yarn produced by the yarn drawing device from the input tension waveform showing a transition of the tension of the fully drawn yarn. Therefore, the likelihood of occurrence of dyeing unevenness can be estimated without a dyeing test being performed on the produced fully drawn yarn. As a result, the man-hours of a test for evaluating the quality of the fully drawn yarn are significantly reduced.

In an example of the present disclosure, the estimation program further causes the information processing device to execute a training step of generating the autoencoder using the normal tension waveform.

With this configuration, training processing and estimation processing are executed by the same information processing device. That is to say, the information processing device can generate the autoencoder in itself.

In an example of the present disclosure, the training step includes a step of executing first preprocessing on the normal tension waveform and a step of generating the autoencoder from the normal tension waveform subjected to the first preprocessing. The step of estimating includes a step of executing second preprocessing on the input tension waveform and processing for inputting the input tension waveform subjected to the second preprocessing to the autoencoder.

With this configuration, the normal tension waveform is processed into a form more suitable for the training by the first preprocessing. Also, the input tension waveform is processed into a form more suitable for the estimation by the second preprocessing.

In an example of the present disclosure, the first preprocessing includes processing for subtracting an average value of the normal tension waveform from the normal tension waveform. The second preprocessing includes processing for subtracting an average value of the input tension waveform from the input tension waveform.

The magnitude of tension does not correlate so much with the likelihood of occurrence of dyeing unevenness. Therefore, by subtracting the average value from the normal tension waveform, a feature amount that has a low correlation with the likelihood of occurrence of dyeing unevenness is removed from the normal tension waveform. Likewise, by subtracting the average value from the input tension waveform, a feature amount that has a low correlation with the likelihood of occurrence of dyeing unevenness is removed from the input tension waveform. This results in improvement in the accuracy of estimating the likelihood of occurrence of dyeing unevenness.

In an example of the present disclosure, the first preprocessing includes processing for dividing the normal tension waveform into segments each having a given length. The second preprocessing includes processing for dividing the input tension waveform into segments each having the given length.

Since the normal tension waveform is divided into segments of the given length, a waveform correlating with the probability of occurrence of dyeing unevenness can be obtained. That is, a feature amount having a low correlation with the likelihood of occurrence of dyeing unevenness is removed from the normal tension waveform. Likewise, since the input tension waveform is divided into segments of the given length, a waveform correlating with the probability of occurrence of dyeing unevenness can be obtained. That is, a feature amount having a low correlation with the likelihood of occurrence of dyeing unevenness is removed from the input tension waveform. This results in improvement in the accuracy of estimating the likelihood of occurrence of dyeing unevenness.

In an example of the present disclosure, each segment having the given length corresponds to a length of 6.0 m or less of the fully drawn yarn.

With this configuration, a waveform that has a higher correlation with the probability of occurrence of dyeing unevenness can be obtained. This results in further improvement in the accuracy of estimating the likelihood of occurrence of dyeing unevenness.

Another example of the present disclosure provides an information processing device capable of estimating a probability of occurrence of dyeing unevenness in a fully drawn yarn produced by a yarn drawing device that draws a yarn while heating the yarn. The information processing device includes a processor for controlling the information processing device. The processor executes: processing for obtaining an autoencoder trained to compress a normal tension waveform showing a normal transition of tension of a fully drawn yarn that is different from the fully drawn yarn produced by the yarn drawing device, and then restore the normal tension waveform; processing for obtaining an input tension waveform showing a transition of tension of the fully drawn yarn produced by the yarn drawing device; and processing for estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.

This information processing device can estimate the probability of occurrence of dyeing unevenness in the fully drawn yarn produced by the yarn drawing device from the input tension waveform showing a transition of the tension of the fully drawn yarn. Therefore, the likelihood of occurrence of dyeing unevenness can be estimated without a dyeing test being performed on the produced fully drawn yarn. As a result, the man-hours of the test for evaluating the quality of the fully drawn yarn are significantly reduced.

In an example of the present disclosure, the input tension waveform is measured by a measurement device different from the yarn drawing device. The measurement device includes: a first roller and a second roller configured to allow a yarn to span therebetween; a heater that is disposed between the first roller and the second roller and configured to heat a yarn spanning between the first roller and the second roller; and a tension sensor that is disposed to measure tension of the fully drawn yarn traveling between the first roller and the second roller.

With this configuration, the input tension waveform used to estimate the likelihood of occurrence of dyeing unevenness in the fully drawn yarn is measured by the measurement device different from the yarn drawing device. Therefore, the likelihood of occurrence of dyeing unevenness in the fully drawn yarn can be estimated without the device configuration of the existing yarn drawing device being changed.

In an example of the present disclosure, the yarn drawing device further includes: a preheating roller configured to heat a yarn prior to being drawn; one or more heat setting rollers disposed downstream of the preheating roller in a yarn traveling direction and configured to heat the yarn at a temperature higher than a temperature at which the yarn is heated by the preheating roller and feed the yarn at a yarn feeding speed higher than a yarn feeding speed of the preheating roller; and a tension sensor disposed to measure tension of the fully drawn yarn traveling between the preheating roller and a heat setting roller located most downstream in the yarn traveling direction among the one or more heat setting rollers.

Since the tension sensor is provided inside the yarn drawing device, the input tension waveform used to estimate the probability of occurrence of dyeing unevenness can be obtained during a process of producing the fully drawn yarn. This shortens the time required for estimating the probability of occurrence of dyeing unevenness.

In an example of the present disclosure, the yarn drawing device further includes: a first roller and a second roller configured to allow a yarn to span therebetween; a heater that is disposed between the first roller and the second roller and configured to heat a yarn spanning between the first roller and the second roller; and a tension sensor that is disposed to measure tension of the fully drawn yarn traveling between the first roller and the second roller.

Since the tension sensor is provided inside the yarn drawing device, the input tension waveform used to estimate the probability of occurrence of dyeing unevenness can be obtained during the process of producing the fully drawn yarn. This shortens the time required for estimating the probability of occurrence of dyeing unevenness.

In an example of the present disclosure, the processor further executes training processing for generating the autoencoder using the normal tension waveform.

With this configuration, the training processing and the estimation processing are executed by the same information processing device. That is, the information processing device can generate the autoencoder in itself.

In an example of the present disclosure, the training processing includes processing for executing first preprocessing on the normal tension waveform and processing for generating the autoencoder from the normal tension waveform subjected to the first preprocessing. The processing for estimating includes processing for executing second preprocessing on the input tension waveform and processing for inputting the input tension waveform subjected to the second preprocessing to the autoencoder.

With this configuration, the normal tension waveform is processed into a form more suitable for the training by the first preprocessing. Also, the input tension waveform is processed into a form more suitable for the estimation by the second preprocessing.

In an example of the present disclosure, the first preprocessing includes processing for subtracting an average value of the normal tension waveform from the normal tension waveform. The second preprocessing includes processing for subtracting an average value of the input tension waveform from the input tension waveform.

The magnitude of tension does not correlate so much with the likelihood of occurrence of dyeing unevenness. Therefore, by subtracting the average value from the normal tension waveform, a feature amount that has a low correlation with the likelihood of occurrence of dyeing unevenness is removed from the normal tension waveform. Likewise, by subtracting the average value from the input tension waveform, a feature amount that has a low correlation with the likelihood of occurrence of dyeing unevenness is removed from the input tension waveform. This results in improvement in the accuracy of estimating the likelihood of occurrence of dyeing unevenness.

In an example of the present disclosure, the first preprocessing includes processing for dividing the normal tension waveform into segments each having a given length. The second preprocessing includes processing for dividing the input tension waveform into segments each having the given length.

Since the normal tension waveform is divided into segments of the given length, a waveform correlating with the probability of occurrence of dyeing unevenness can be obtained. That is, a feature amount having a low correlation with the likelihood of occurrence of dyeing unevenness is removed from the normal tension waveform. Likewise, since the input tension waveform is divided into segments of the given length, a waveform correlating with the probability of occurrence of dyeing unevenness can be obtained. That is, a feature amount having a low correlation with the likelihood of occurrence of dyeing unevenness is removed from the input tension waveform. This results in improvement in the accuracy of estimating the likelihood of occurrence of dyeing unevenness.

In an example of the present disclosure, each segment having the given length corresponds to a length of 6.0 m or less of the fully drawn yarn.

With this configuration, a waveform that has a higher correlation with the probability of occurrence of dyeing unevenness can be obtained. This results in further improvement in the accuracy of estimating the likelihood of occurrence of dyeing unevenness.

Another example of the present disclosure provides an estimation method that enables estimation of a probability of occurrence of dyeing unevenness in a fully drawn yarn produced by a yarn drawing device that draws a yarn while heating the yarn. The estimation method includes: a step of obtaining an autoencoder trained to compress a normal tension waveform showing a normal transition of tension of a fully drawn yarn that is different from the fully drawn yarn produced by the yarn drawing device, and then restore the normal tension waveform; a step of obtaining an input tension waveform showing a transition of tension of the fully drawn yarn produced by the yarn drawing device; and a step of estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.

With this estimation method, it is possible to estimate the probability of occurrence of dyeing unevenness in the fully drawn yarn produced by the yarn drawing device from the input tension waveform showing a transition of tension of the fully drawn yarn. Therefore, the likelihood of occurrence of dyeing unevenness can be estimated without a dyeing test being performed on the produced fully drawn yarn. As a result, the man-hours of the test for evaluating the quality of the fully drawn yarn are significantly reduced.

In an example of the present disclosure, the estimation method further includes a training step of generating the autoencoder using the normal tension waveform.

With this configuration, the training processing and the estimation processing are executed by the same information processing device. That is, the information processing device can generate the autoencoder in itself.

In an example of the present disclosure, the training step includes a step of executing first preprocessing on the normal tension waveform and a step of generating the autoencoder from the normal tension waveform subjected to the first preprocessing. The step of estimating includes a step of executing second preprocessing on the input tension waveform and processing for inputting the input tension waveform subjected to the second preprocessing to the autoencoder.

With this configuration, the normal tension waveform is processed into a form more suitable for the training by the first preprocessing. Also, the input tension waveform is processed into a form more suitable for the estimation by the second preprocessing.

In an example of the present disclosure, the first preprocessing includes processing for subtracting an average value of the normal tension waveform from the normal tension waveform. The second preprocessing includes processing for subtracting an average value of the input tension waveform from the input tension waveform.

The magnitude of tension does not correlate so much with the likelihood of occurrence of dyeing unevenness. Therefore, by subtracting the average value from the normal tension waveform, a feature amount that has a low correlation with the likelihood of occurrence of dyeing unevenness is removed from the normal tension waveform. Likewise, by subtracting the average value from the input tension waveform, a feature amount that has a low correlation with the likelihood of occurrence of dyeing unevenness is removed from the input tension waveform. This results in improvement in the accuracy of estimating the likelihood of occurrence of dyeing unevenness.

In an example of the present disclosure, the first preprocessing includes processing for dividing the normal tension waveform into segments each having a given length. The second preprocessing includes processing for dividing the input tension waveform into segments each having the given length.

Since the normal tension waveform is divided into segments of the given length, a waveform correlating with the probability of occurrence of dyeing unevenness can be obtained. That is, a feature amount having a low correlation with the likelihood of occurrence of dyeing unevenness is removed from the normal tension waveform. Likewise, since the input tension waveform is divided into segments of the given length, a waveform correlating with the probability of occurrence of dyeing unevenness can be obtained. That is, a feature amount having a low correlation with the likelihood of occurrence of dyeing unevenness is removed from the input tension waveform. This results in improvement in the accuracy of estimating the likelihood of occurrence of dyeing unevenness.

In an example of the present disclosure, each segment having the given length corresponds to a length of 6.0 m or less of the fully drawn yarn.

With this configuration, a waveform that has a higher correlation with the probability of occurrence of dyeing unevenness can be obtained. This results in further improvement in the accuracy of estimating the likelihood of occurrence of dyeing unevenness.

The foregoing and other objects, features, aspects, and advantages of the present invention will be apparent from the following detailed description relating to the invention that is understood in conjunction with the accompanying drawings.

### Brief Description of Drawings

FIG. 1 is a schematic diagram showing an example of a device configuration of a yarn take-up device.
FIG. 2 is a schematic diagram showing a measurement device that measures tension for determining dyeing characteristics of a fully drawn yarn.
FIG. 3 is a block diagram showing an electrical configuration of the measurement device shown in FIG. 2.
FIG. 4 is a graph showing measurement results of tensions of three types of fully drawn yarns.
FIG. 5 shows images of dyed samples produced using the three types of fully drawn yarns, respectively.
FIG. 6 is a diagram schematically illustrating processing for estimating the likelihood of occurrence of dyeing unevenness from a tension waveform of a fully drawn yarn.
FIG. 7 is a diagram showing an example of an input tension waveform and an output tension waveform.
FIG. 8 is a diagram showing another example of the input tension waveform and the output tension waveform.
FIG. 9 is a diagram showing an example of a hardware configuration of a control unit.
FIG. 10 is a diagram showing an example of a training data set.
FIG. 11 is a diagram showing an example of a functional configuration of the control unit.
FIG. 12 is a diagram conceptually illustrating an example of preprocessing executed by a preprocessing unit.
FIG. 13 is a diagram conceptually illustrating another example of the preprocessing executed by the preprocessing unit.
FIG. 14 is a diagram conceptually illustrating training processing executed by a training unit.
FIG. 15 is a diagram conceptually illustrating estimation processing executed by an estimation unit.
FIG. 16 is a diagram showing a relationship between degrees of similarity between an input tension waveform and an output tension waveform and a threshold value.
FIG. 17 is a flowchart showing a flow of the training processing.
FIG. 18 is a flowchart showing a flow of the estimation processing.
FIG. 19 is a diagram showing a result of an evaluation experiment in a graph.
FIG. 20 is a diagram showing a result of the evaluation experiment in a graph.
FIG. 21 is a diagram showing a result of the evaluation experiment in a graph.
FIG. 22 is a diagram showing an example of a device configuration of an information processing system according to a first modification example.
FIG. 23 is a diagram showing a yarn take-up device according to a second modification example.
FIG. 24 is a diagram showing a yarn take-up device according to a third modification example.

### Description of Embodiments

The following describes embodiments of the present invention with reference to the drawings. In the following description, identical components and constituent elements are denoted by the same reference numerals. Their names and functions are the same. Therefore, detailed descriptions of those components and constituent elements will not be repeated. The embodiments and modification examples described below may be selectively combined with each other as appropriate.

### <A. Yarn take-up device 1>

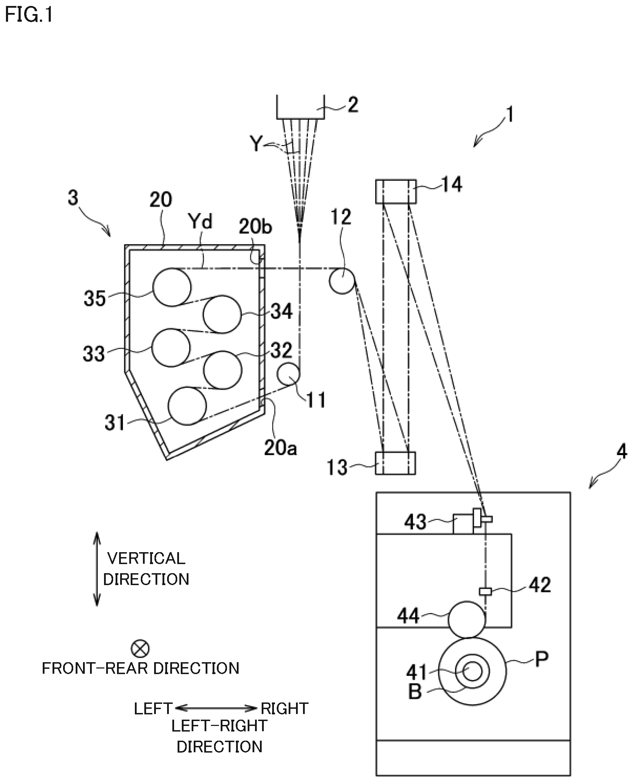

First, a yarn take-up device 1 that is a device for producing a fully drawn yarn will be described with reference to FIG. 1. FIG. 1 is a schematic diagram showing an example of a device configuration of the yarn take-up device 1. The direction perpendicular to the sheet of FIG. 1 is defined as a front-rear direction, and the left-right direction in the sheet is defined as a left-right direction. The direction orthogonal to both the front-rear direction and the left-right direction is defined as a vertical direction in which gravity acts.

As shown in FIG. 1, the yarn take-up device 1 is mainly composed of a yarn drawing device 3 and a yarn winding device 4. In the yarn take-up device 1, a plurality of yarns Y spun from a spinning device 2 are drawn by the yarn drawing device 3 to produce fully drawn yarns Yd, and the fully drawn yarns Yd are then wound by the yarn winding device 4 to form a plurality of packages P. The spinning device 2 produces the plurality of yarns Y by continuously spinning a molten fiber material such as polyester. The plurality of yarns Y spun from the spinning device 2 are fed to the yarn drawing device 3 via a guide roller 11. The plurality of yarns Y (fully drawn yarns Yd) drawn by the yarn drawing device 3 are fed to the yarn winding device 4 by guide rollers 12 to 14.

The yarn drawing device 3 is a device for heating and drawing the plurality of yarns Y and is disposed below the spinning device 2. The yarn drawing device 3 includes a plurality of godet rollers 31 to 35 accommodated in a warming box 20.

Each of the godet rollers 31 to 35 feeds the yarns Y in a yarn traveling direction from a yarn inlet 20a to a yarn outlet 20b of the warming box 20 while heating the yarns Y. The godet rollers 31 to 35 are arranged in this order from the upstream side in the yarn traveling direction. The plurality of yarns Y are wound around each of the godet rollers 31 to 35 at a winding angle of less than 360 degrees. The godet rollers 31 to 35 are each rotationally driven by a motor (not shown) at a predetermined yarn feeding speed. Each of the godet rollers 31 to 35 has a roller heater (not shown) built therein for heating the roller surface.

Out of the godet rollers 31 to 35, the three godet rollers 31 to 33 located on the upstream side in the yarn traveling direction are preheating rollers for heating the yarns Y prior to being drawn. The roller surface temperature of the godet rollers 31 to 33 is set to a temperature (for example, about 80°C to 100°C) equal to or higher than the glass transition point of the yarns Y. On the other hand, out of the godet rollers 31 to 35, the two godet rollers 34 and 35 located on the downstream side in the yarn traveling direction are heat setting rollers used for heat setting of the plurality of drawn yarns Y. The roller surface temperature of the godet rollers 34 and 35 is set to a temperature (for example, about 130°C to 150°C) higher than the roller surface temperature of the godet rollers 31 to 33. That is to say, the godet rollers 34 and 35 heat the yarns Y at a temperature higher than a temperature at which the yarns Y are heated by the godet rollers 31 to 33. The godet rollers 34 and 35 feed the yarns at a yarn feeding speed higher than the yarn feeding speed of the godet rollers 31 to 33.

The plurality of yarns Y introduced into the warming box 20 through the yarn inlet 20a are first preheated to a temperature at which the yarns can be drawn while being fed by the godet rollers 31 to 33. The plurality of preheated yarns Y are drawn between the godet roller 33 and the godet roller 34. The godet roller 33 is located on the most downstream side in the yarn traveling direction out of the three godet rollers 31 to 33 serving as the preheating rollers. The godet roller 34 is located on the most upstream side in the yarn traveling direction out of the two godet rollers 34 and 35 serving as the heat setting rollers. Thereafter, the plurality of yarns Y are further heated to a higher temperature while being fed by the godet rollers 34 and 35, so that the drawn state is thermally fixed. The yarns Y (fully drawn yarns Yd) drawn as described above are discharged out of the warming box 20 through the yarn outlet 20b.

The yarn winding device 4 is a device for winding up the plurality of yarns Y (fully drawn yarns Yd) and is disposed below the yarn drawing device 3. The yarn winding device 4 is mainly composed of a bobbin holder 41, a plurality of traverse guides 42, a plurality of fulcrum guides 43, and a contact roller 44.

The bobbin holder 41 has a cylindrical shape extending in the front-rear direction, and is rotationally driven by a motor (not shown). A plurality of bobbins B are mounted on the bobbin holder 41 side by side in the axial direction of the bobbin holder 41. The plurality of traverse guides 42 and the plurality of fulcrum guides 43 are provided so as to correspond to the plurality of bobbins B. Each traverse guide 42 is reciprocated in the front-rear direction by a driving force applied from a motor (not shown) and traverses a yarn Y that is hung on the corresponding fulcrum guide 43.

The yarn winding device 4 simultaneously winds the plurality of yarns Y onto the plurality of bobbins B by rotating the bobbin holder 41, thereby producing a plurality of packages P. The contact roller 44 comes into contact with the surfaces of the plurality of packages P to apply a predetermined contact pressure and adjust the shapes of the packages P.

### <B. Measurement device 5>

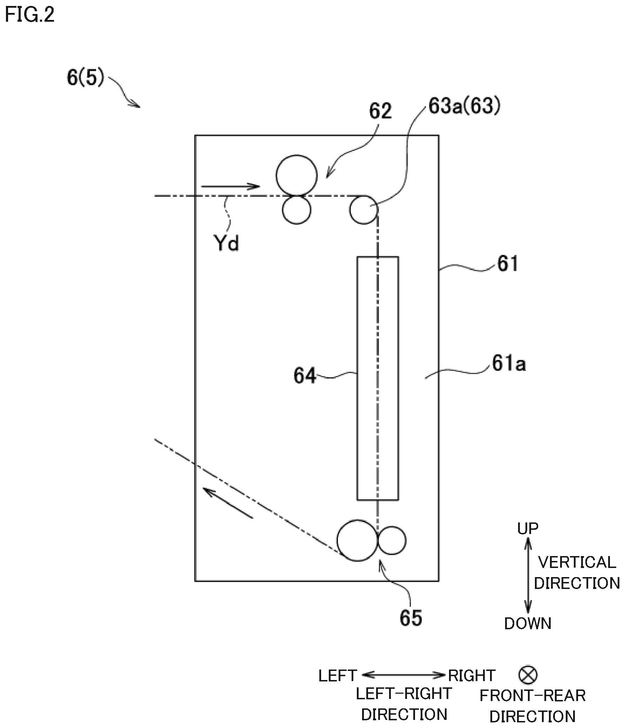

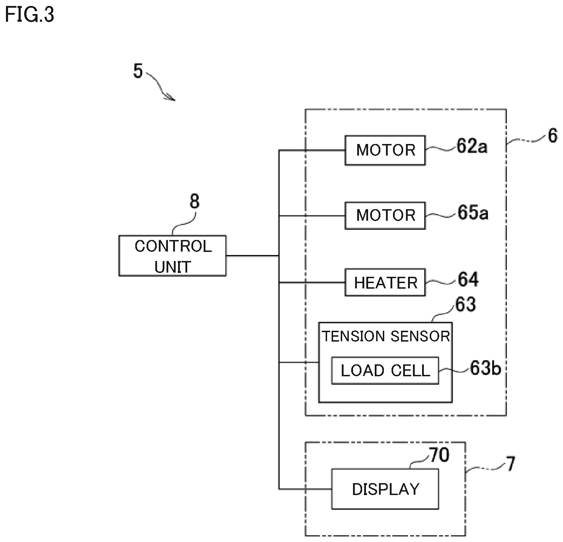

Next, the following describes the configuration of a measurement device 5 that measures tension to determine dyeing unevenness characteristics of a fully drawn yarn Yd produced as described above with reference to FIGS. 2 and 3. The direction perpendicular to the sheet of FIG. 2 is defined as the front-rear direction, and the left-right direction in the sheet is defined as the left-right direction. The direction orthogonal to both the front-rear direction and the left-right direction is defined as the vertical direction in which gravity acts.

The measurement device 5 is provided for measuring the tension of a fully drawn yarn Yd traveling while being heated and stretched. As shown in FIGS. 2 and 3, the measurement device 5 includes a measurement unit 6 for measuring tension, an output unit 7 for outputting measurement results, and a control unit 8 for controlling the overall operation of the measurement device 5.

As shown in FIG. 2, the measurement unit 6 is mainly composed of a base 61, a first yarn feeding roller pair 62, a tension sensor 63, a heater 64, and a second yarn feeding roller pair 65, which are mounted on a front surface 61a of the base 61. The fully drawn yarn Yd can be set so as to span between the first yarn feeding roller pair 62 and the second yarn feeding roller pair 65. Each roller of the first yarn feeding roller pair 62 corresponds to a "first roller" according to the present invention. Each roller of the second yarn feeding roller pair 65 corresponds to a "second roller" according to the present invention.

The first yarn feeding roller pair 62, the tension sensor 63, the heater 64, and the second yarn feeding roller pair 65 are arranged in this order from the upstream side to the downstream side in the traveling direction of the fully drawn yarn Yd (hereinafter referred to simply as the "yarn traveling direction"). That is to say, the tension sensor 63 and the heater 64 are disposed between the first yarn feeding roller pair 62 and the second yarn feeding roller pair 65.

The first yarn feeding roller pair 62 is disposed in an upper end portion of the front surface 61a of the base 61. The first yarn feeding roller pair 62 is rotated by a driving force applied from a motor 62a (see FIG. 3) to feed the fully drawn yarn Yd from left to right. The operation of the motor 62a is controlled by the control unit 8. That is to say, the yarn feeding speed of the first yarn feeding roller pair 62 is controlled by the control unit 8.

The tension sensor 63 includes a measurement roller 63a and a load cell 63b (see FIG. 3). The measurement roller 63a is positioned on the right of the first yarn feeding roller pair 62. That is to say, the measurement roller 63a is downstream of the first yarn feeding roller pair 62 in the yarn traveling direction. The fully drawn yarn Yd fed from left to right by the first yarn feeding roller pair 62 is wound around the measurement roller 63a. On the downstream side of the measurement roller 63a in the yarn traveling direction, the fully drawn yarn Yd travels downward. The load cell 63b detects a force acting on the measurement roller 63a from the fully drawn yarn Yd, thereby measuring the tension of the fully drawn yarn Yd spanning between the first yarn feeding roller pair 62 and the second yarn feeding roller pair 65. The value of the tension of the fully drawn yarn Yd measured by the load cell 63b is input to the control unit 8.

The heater 64 is disposed below the measurement roller 63a. The heater 64 extends in the vertical direction. The length of the heater 64 along the vertical direction is, for example, 1000 mm. The fully drawn yarn Yd traveling downward on the downstream side of the measurement roller 63a in the yarn traveling direction passes through the heater 64. The heater 64 heats the fully drawn yarn Yd spanning between the first yarn feeding roller pair 62 and the second yarn feeding roller pair 65. The heating temperature of the heater 64 is controlled by the control unit 8.

The second yarn feeding roller pair 65 is disposed below the heater 64. The length along the yarn path between the first yarn feeding roller pair 62 and the second yarn feeding roller pair 65 is, for example, 1250 mm. The second yarn feeding roller pair 65 is rotated by a driving force applied from a motor 65a (see FIG. 3) to feed the fully drawn yarn Yd fed from the upper side in a diagonally upward and leftward direction. The operation of the motor 65a is controlled by the control unit 8. That is to say, the yarn feeding speed of the second yarn feeding roller pair 65 is controlled by the control unit 8.

As shown in FIG. 3, the output unit 7 includes a display 70. The display 70 displays results of tension measurement performed by the measurement unit 6 under control of the control unit 8.

Next, the following describes control performed by the control unit 8 when the measurement device 5 measures tension for estimating the dyeing unevenness characteristics.

The control unit 8 controls the yarn feeding speed of the first yarn feeding roller pair 62 and the yarn feeding speed of the second yarn feeding roller pair 65, thereby controlling the tension state of the fully drawn yarn Yd between the first yarn feeding roller pair 62 and the second yarn feeding roller pair 65. In this embodiment, the control unit 8 performs control such that the yarn feeding speed of the second yarn feeding roller pair 65 is higher than the yarn feeding speed of the first yarn feeding roller pair 62. Alternatively, the control unit 8 may perform control such that the yarn feeding speed of the second yarn feeding roller pair 65 is equal to the yarn feeding speed of the first yarn feeding roller pair 62. In this embodiment, the control unit 8 causes the fully drawn yarn Yd to be stretched between the first yarn feeding roller pair 62 and the second yarn feeding roller pair 65. More specifically, the control unit 8 performs control such that the amount of deformation of the fully drawn yarn Yd stretched between the first yarn feeding roller pair 62 and the second yarn feeding roller pair 65 falls within an elastic range. That is to say, the first yarn feeding roller pair 62 and the second yarn feeding roller pair 65 can support the fully drawn yarn Yd in the state of being stretched by a deformation amount within the elastic range.

The control unit 8 controls the heating temperature of the heater 64 to 120°C to 140°C. More specifically, the control unit 8 performs control such that the fully drawn yarn Yd heated by the heater 64 has a temperature of 120°C to 140°C. It should be noted that the heating temperature of the heater 64 is set to a temperature lower than the heat setting temperature (the roller surface temperature (about 130°C to 150°C) of the godet rollers 34 and 35 serving as the heat setting rollers) at which heat setting is performed in the production of the fully drawn yarn Yd. Therefore, it is possible to prevent the molecular structure of the fully drawn yarn Yd from being affected by the heating by the heater 64. Also, polyester yarn Y is dyed usually at a high temperature of about 130°C to 135°C under a high pressure. Accordingly, by setting the heating temperature of the heater 64 to 120°C to 140°C, it is possible to measure the tension of the fully drawn yarn Yd at a temperature at which the fully drawn yarn is dyed.

That is to say, in the measurement device 5, the tension sensor 63 can measure the tension of the fully drawn yarn Yd in the state of being heated at 120°C to 140°C and stretched such that the amount of deformation falls within the elastic range. Further, in the measurement device 5, the tension sensor 63 measures the tension of the fully drawn yarn Yd that is traveling. That is to say, the tension sensor 63 can measure the tension at a plurality of points in the longitudinal direction of the fully drawn yarn Yd.

In this method for estimating dyeing unevenness, the tension of the fully drawn yarn Yd is measured by the measurement device 5, and based on the tension of the fully drawn yarn Yd measured by the measurement device 5, the probability of occurrence of dyeing unevenness is estimated for the fully drawn yarn Yd. Details of the estimation processing will be described later.

### <C. Description of principles>

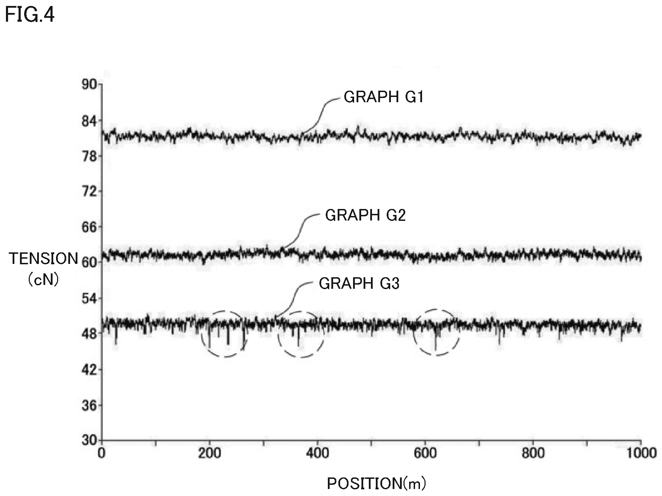

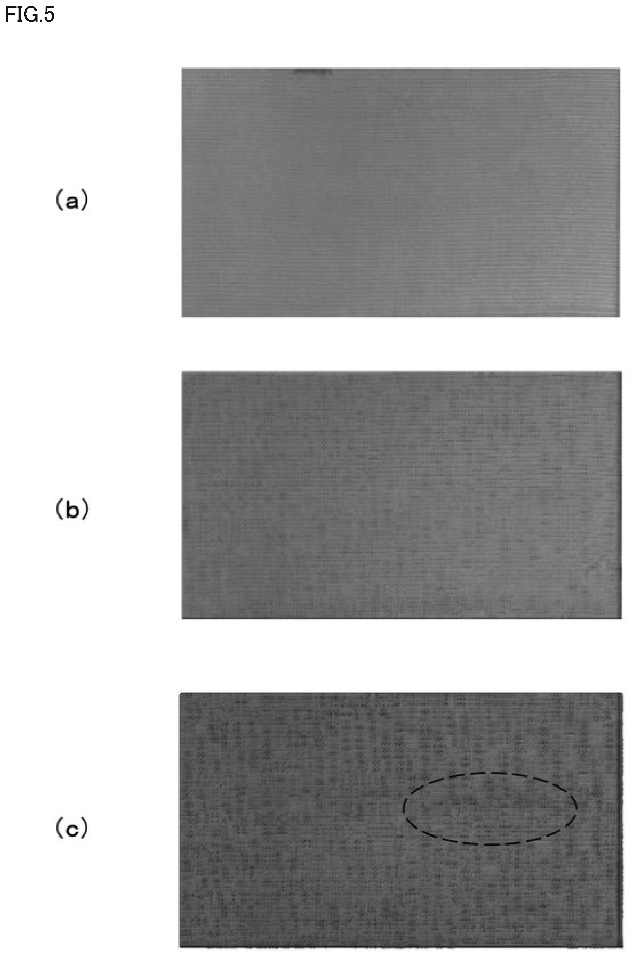

Next, the following describes principles of the estimation of the probability of occurrence of dyeing unevenness from a measured value of the tension of a fully drawn yarn Yd with reference to FIGS. 4 and 5.

FIG. 4 is a diagram showing actual measurement results of tensions of three types of fully drawn yarns Yd1 to Yd3, which were measured while the yarns were traveling in the state of being heated to 120°C to 140°C and stretched such that the amount of deformation was within the elastic range. FIG. 5 is a diagram showing results of dyeing samples S1 to S3 produced by knitting the fully drawn yarns Yd1 to Yd3, respectively.

More particularly, a graph G1 in FIG. 4 shows a measured tension waveform of the fully drawn yarn Yd1. FIG. 5(a) shows an image of the dyed sample S1 made of the fully drawn yarn Yd1.

Also, a graph G2 in FIG. 4 shows a measured tension waveform of the fully drawn yarn Yd2. FIG. 5(b) shows an image of the dyed sample S2 made of the fully drawn yarn Yd2.

Further, a graph G3 in FIG. 4 shows a measured tension waveform of the fully drawn yarn Yd3. FIG. 5(c) shows an image of the dyed sample S3 made of the fully drawn yarn Yd3.

Dyeing unevenness is not observed in the image of the dyed sample S1 shown in FIG. 5(a). On the other hand, slight dyeing unevenness is observed in the image of the dyed sample S2 shown in FIG. 5(b), compared with the image of the dyed sample S1. Also, in the image of the dyed sample S3 shown in FIG. 5(c), severe dyeing unevenness is observed (e.g., a region surrounded by a broken line in FIG. 5(c)), compared with the image of the dyed sample S1.

Whether or not such dyeing unevenness occurs is indicated by the tension waveforms shown in FIG. 4. More specifically, the tension waveforms shown by the graphs G2 and G3 have variations compared with the tension waveform shown by the graph G1. In particular, the graph G3 includes regions where the measured value of tension greatly varies (e.g., regions surrounded by broken lines in FIG. 4), compared with the graph G1. That is to say, it can be found that the greater the difference from the normal tension waveform of the graph G1, the higher the probability of occurrence of dyeing unevenness. Focusing on this point, the control unit 8 according to the present embodiment estimates a likelihood of occurrence of dyeing unevenness in a fully drawn yarn based on a tension waveform of the fully drawn yarn.

### <D. Overview of estimation processing>

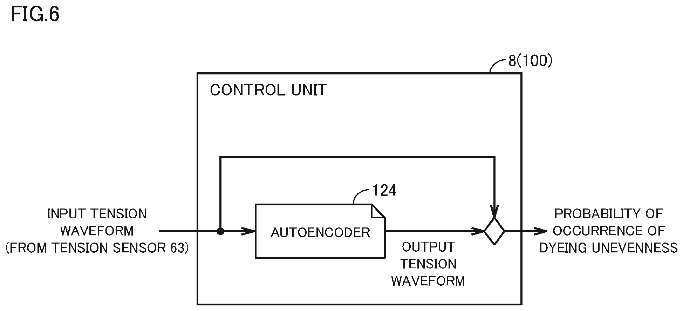

Next, the following describes processing for estimating the likelihood of occurrence of dyeing unevenness from a tension waveform of a fully drawn yarn with reference to FIGS. 6 to 8. FIG. 6 is a diagram schematically illustrating the estimation processing.

The processing for estimating the likelihood of occurrence of dyeing unevenness is executed by, for example, the control unit 8 described above, which is an example of an information processing device 100. More specifically, the control unit 8 obtains an autoencoder 124 generated through training processing. The autoencoder 124 is trained in advance to compress a normal tension waveform showing a normal transition of the tension of a fully drawn yarn, and then restore the normal tension waveform. Details of the training processing will be described later.

Next, the control unit 8 obtains an input tension waveform showing a transition of the tension of a fully drawn yarn Yd produced by the yarn drawing device 3. The input tension waveform, which is the target of the estimation, is obtained from the tension sensor 63 (see FIG. 2) described above, for example.

Next, the control unit 8 inputs the obtained input tension waveform to the autoencoder 124. If a normal tension waveform is input, the autoencoder 124 outputs a tension waveform that is similar to this normal tension waveform. On the other hand, if an abnormal tension waveform is input, the autoencoder 124 outputs a tension waveform that is different from the abnormal tension waveform.

Thereafter, the control unit 8 calculates a degree of similarity between the input tension waveform and an output tension waveform obtained from the autoencoder 124 by inputting the input tension waveform to the autoencoder 124. Then, based on the calculated degree of similarity, the control unit 8 estimates the probability of occurrence of dyeing unevenness for the fully drawn yarn Yd that is the target of the estimation.

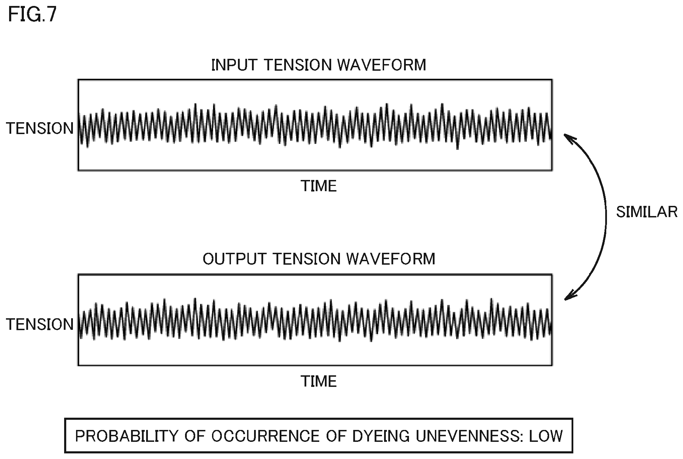

FIG. 7 is a diagram showing an example of the input tension waveform and the output tension waveform. In this example, the input tension waveform and the output tension waveform are similar to each other. The more the input tension waveform and the output tension waveform are similar to each other as in this example, the lower the probability of occurrence of dyeing unevenness.

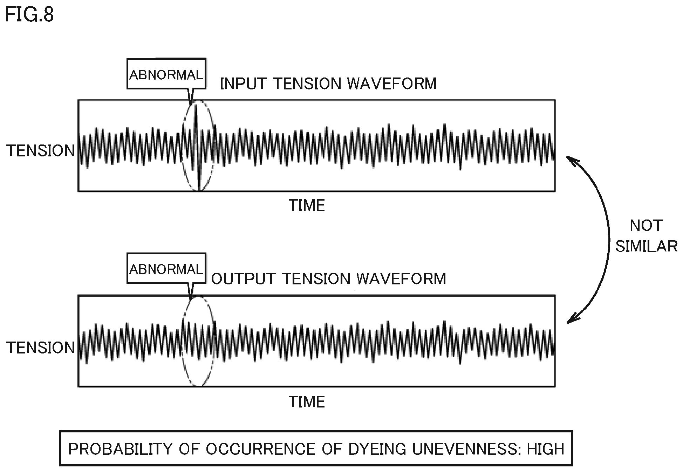

FIG. 8 is a diagram showing another example of the input tension waveform and the output tension waveform. In this example, the input tension waveform and the output tension waveform are not similar to each other. The greater the difference between the input tension waveform and the output tension waveform as in this example, the higher the probability of occurrence of dyeing unevenness.

As described above, the degree of similarity between the input tension waveform and the output tension waveform correlates with the likelihood of occurrence of dyeing unevenness in the fully drawn yarn Yd. Focusing on this point, the control unit 8 estimates the probability of occurrence of dyeing unevenness from the degree of similarity. Thus, the probability of occurrence of dyeing unevenness is estimated without the fully drawn yarn Yd produced by the yarn drawing device 3 being actually dyed. As a result, it is possible to significantly reduce the number of steps of a test for evaluating the quality of the fully drawn yarn Yd.

Moreover, the autoencoder 124 is generated through training processing using normal tension waveforms. That is to say, it is not necessary to collect abnormal tension waveforms in order to generate the autoencoder 124, so that training data can be collected easily. Therefore, the number of design steps can be significantly reduced.

### <E. Hardware configuration of control unit 8>

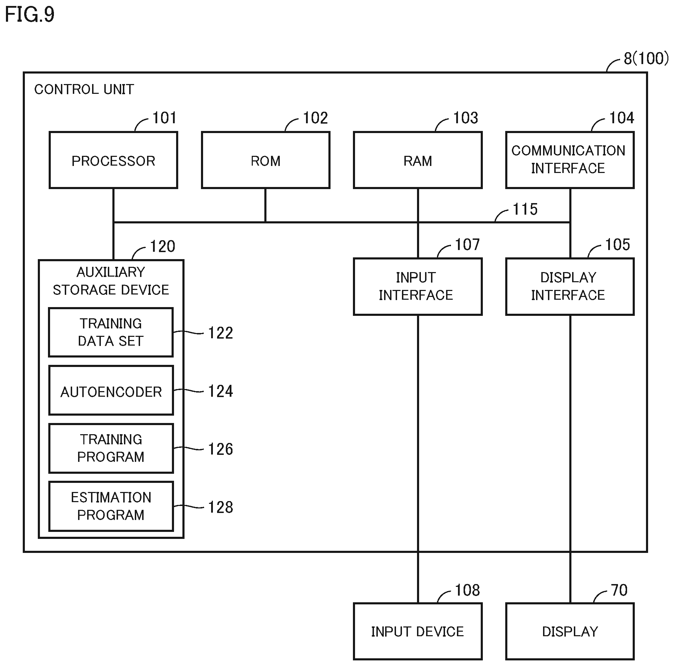

Next, the following describes a hardware configuration of the control unit 8 shown in FIG. 3 with reference to FIG. 9. FIG. 9 is a diagram showing an example of the hardware configuration of the control unit 8.

The control unit 8 includes a processor 101, a ROM (Read Only Memory) 102, a RAM (Random Access Memory) 103, a communication interface 104, a display interface 105, an input interface 107, and an auxiliary storage device 120. These components are connected to a bus 115.

The processor 101 is constituted by at least one integrated circuit, for example. The integrated circuit may be constituted by, for example, at least one CPU, at least one GPU (Graphics Processing Unit), at least one ASIC (Application Specific Integrated Circuit), at least one FPGA (Field Programmable Gate Array), or a combination of any of these.

The processor 101 controls the operation of the control unit 8 by executing various programs such as a training program 126 and an estimation program 128. Upon receiving commands for executing various programs, the processor 101 reads a program to be executed from the auxiliary storage device 120 or the ROM 102 to the RAM 103. The RAM 103 functions as a working memory and temporarily stores various types of data necessary for the execution of the program.

A LAN (Local Area Network), an antenna, and the like are connected to the communication interface 104. The control unit 8 transmits data to an external device and receives data from the external device via the communication interface 104. The external device includes, for example, a server and the like.

The display 70 described above (see FIG. 3) is connected to the display interface 105. The display interface 105 transmits an image signal for displaying an image to the display 70 in accordance with a command from the processor 101 or the like. The display 70 is, for example, a liquid crystal display, an organic EL (Electro Luminescence) display, or another display. The display 70 may be integrated with the control unit 8 or may be configured separately from the control unit 8.

An input device 108 is connected to the input interface 107. The input device 108 is, for example, a mouse, a keyboard, a touch panel, or another device capable of accepting user operations. The input device 108 may be integrated with the control unit 8 or may be configured separately from the control unit 8.

The auxiliary storage device 120 is a storage medium such as a hard disk, a flash memory, or an SSD (Solid State Drive). The auxiliary storage device 120 stores, for example, a training data set 122, the autoencoder 124 described above, the training program 126, and the estimation program 128. The storage location of these is not limited to the auxiliary storage device 120, and may be a storage area (e.g., a cache memory) of the processor 101, the ROM 102, the RAM 103, an external device (e.g., a server), or the like.

The training program 126 is a program for generating the autoencoder 124 using the training data set 122. The training program 126 may also be provided as part of any program, rather than a standalone program. In this case, the training processing performed in accordance with the training program 126 is realized in cooperation with any program. Even such a program that does not include some modules does not deviate from the gist of the training program 126 according to this embodiment. Furthermore, some or all of the functions provided by the training program 126 may also be realized by dedicated hardware. Furthermore, the control unit 8 may be configured in a form such as a so-called cloud service in which at least one server executes some of the processing of the training program 126.

The estimation program 128 is a program for estimating, using the autoencoder 124, the likelihood of occurrence of dyeing unevenness in a fully drawn yarn produced by the yarn drawing device 3. The estimation program 128 may also be provided as part of any program, rather than a standalone program. In this case, the estimation processing performed in accordance with the estimation program 128 is realized in cooperation with any program. Even such a program that does not include some modules does not deviate from the gist of the estimation program 128 according to this embodiment. Furthermore, some or all of the functions provided by the estimation program 128 may also be realized by dedicated hardware. Furthermore, the control unit 8 may be configured in a form such as a so-called cloud service in which at least one server executes some of the processing of the estimation program 128.

### <F. Training data set 122>

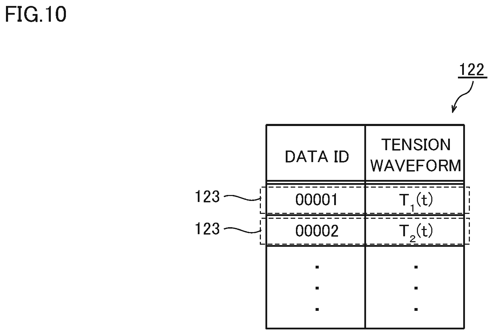

Next, the following describes the training data set 122 shown in FIG. 9 with reference to FIG. 10. FIG. 10 is a diagram showing an example of the training data set 122.

The training data set 122 includes a plurality of pieces of training data 123. The number of pieces of training data 123 included in the training data set 122 may be set suitably. For example, the number of pieces of training data 123 is several tens to several millions.

The training data set 122 includes only training data 123 of normal tension waveforms. More specifically, in each piece of training data 123, a data ID (identification) is associated with a normal tension waveform for which dyeing unevenness will not occur. The data ID is information for uniquely identifying the training data 123. For example, the data ID is input by a user by avoiding duplication.

A tension waveform defined by the training data 123 is a group of data in which measured tension values are arranged in time series. That is to say, in each piece of training data 123, tension values are associated with time.

The tension of a fully drawn yarn Yd is measured in a state where the fully drawn yarn Yd is heated between 120°C and 140°C, is not stretched, and has no slack. Alternatively, the tension of the fully drawn yarn Yd is measured in a state where the fully drawn yarn Yd is heated between 120°C and 140°C and stretched such that the amount of deformation falls within the elastic range.

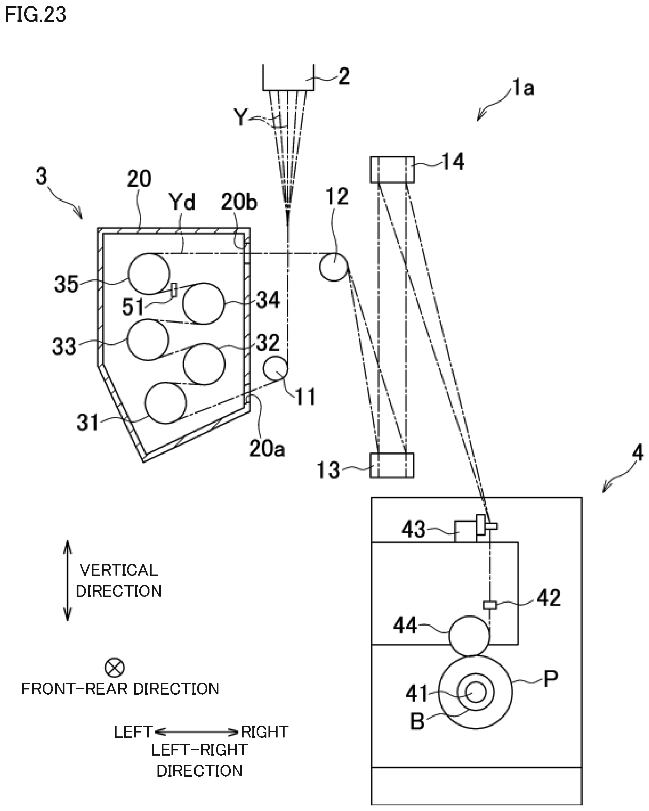

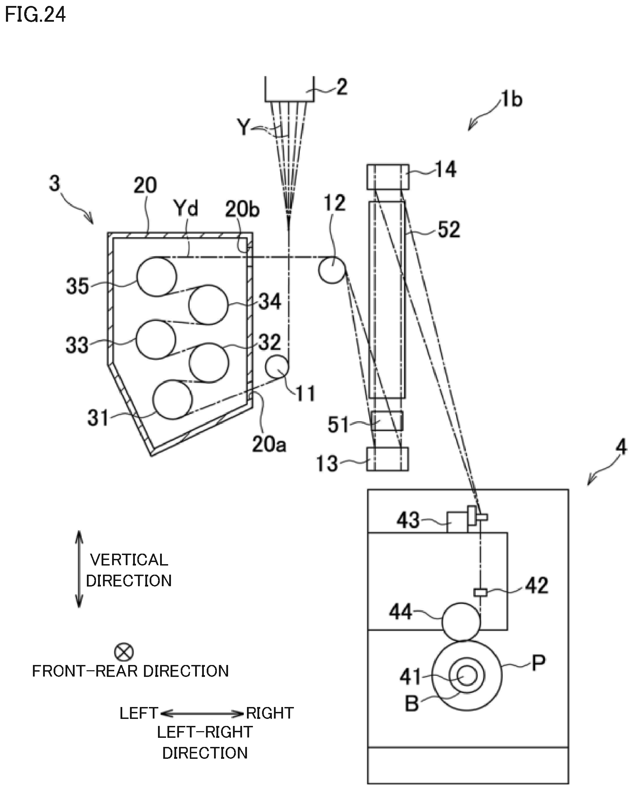

The training data 123 may be collected from various devices. For example, the training data 123 may include a tension waveform measured by the tension sensor 63 in the measurement device 5 described above. Alternatively, the training data 123 may include a tension waveform measured by a tension sensor 51 described below (see FIG. 23 or FIG. 24).

### <G. Functional configuration of control unit 8>

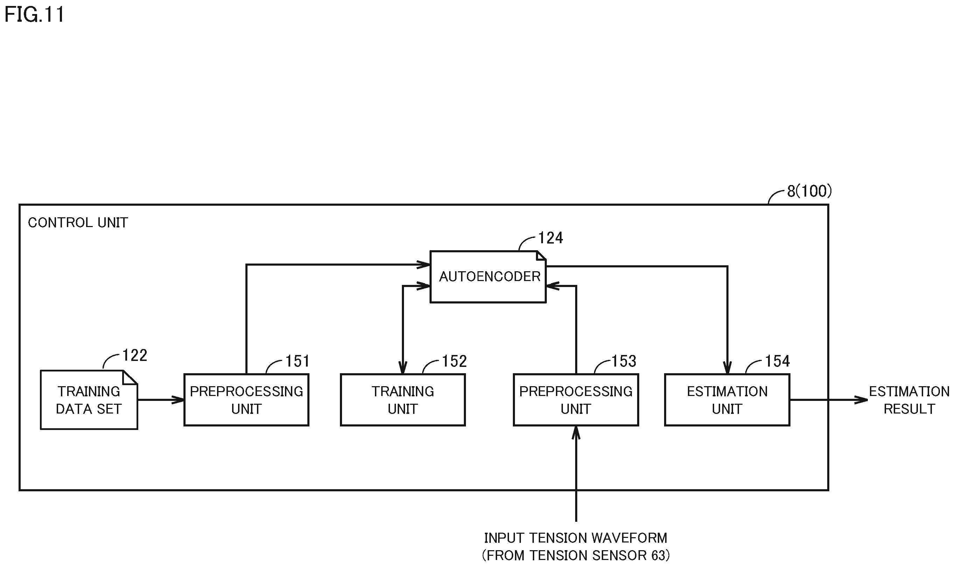

Next, the following describes a functional configuration of the control unit 8 with reference to FIGS. 11 to 16. FIG. 11 is a diagram showing an example of the functional configuration of the control unit 8.

As shown in FIG. 11, the control unit 8 includes, as functional units, a preprocessing unit 151, a training unit 152, a preprocessing unit 153, and an estimation unit 154. These functional units will be sequentially described below.

### (G1. Preprocessing unit 151)

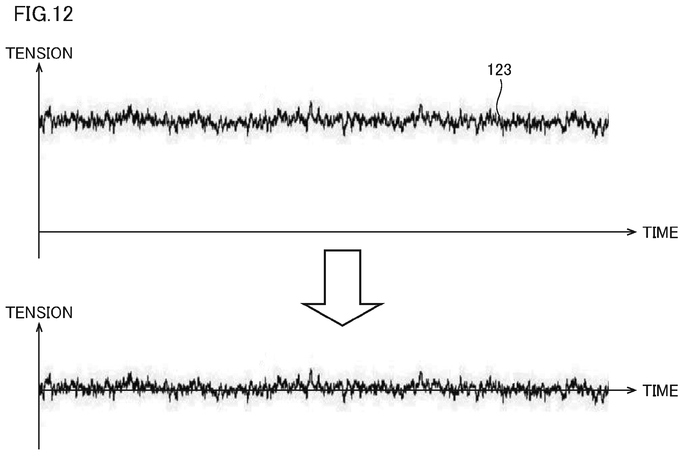

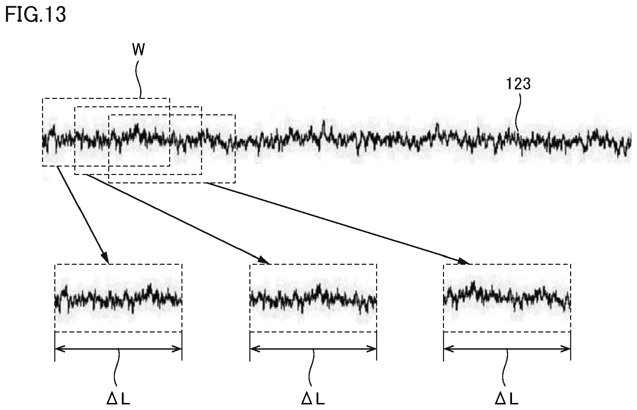

First, functions of the preprocessing unit 151 shown in FIG. 11 will be described with reference to FIGS. 12 and 13. FIG. 12 is a diagram conceptually illustrating an example of preprocessing executed by the preprocessing unit 151. FIG. 13 is a diagram conceptually illustrating another example of the preprocessing executed by the preprocessing unit 151.

The preprocessing unit 151 executes various types of preprocessing (first preprocessing) on a normal tension waveform defined by the training data 123 (see FIG. 10) described above. Thus, the normal tension waveform is processed into a form suitable for training.

In an aspect, the preprocessing unit 151 executes the preprocessing shown in FIG. 12. More specifically, the preprocessing unit 151 calculates an average value of the normal tension waveform. Thereafter, the preprocessing unit 151 subtracts the calculated average value from the normal tension waveform. As described above in "C. Description of principles", variations in a tension waveform correlate with the likelihood of occurrence of dyeing unevenness. On the other hand, the magnitude of tension does not correlate so much with the likelihood of occurrence of dyeing unevenness. Therefore, if the average value is subtracted from the normal tension waveform, only feature amounts having higher correlation with the likelihood of occurrence of dyeing unevenness are left. As a result, the likelihood of occurrence of dyeing unevenness is estimated more accurately.

In another aspect, the preprocessing unit 151 executes the preprocessing shown in FIG. 13. More specifically, the preprocessing unit 151 executes preprocessing for dividing the normal tension waveform defined by the training data 123 into segments ΔL each having a given length. As an example, the preprocessing unit 151 sequentially slides a frame W defining each segment ΔL on the normal tension waveform and cuts out a portion of the tension waveform in the frame W. Effects of this preprocessing will be described later in "J. Evaluation experiment". The segments ΔL may overlap with each other or may be kept from overlapping with each other.

The length of each segment ΔL can be set suitably. Preferably, each segment ΔL corresponds to a length of 6.0 m or less of the fully drawn yarn Yd. The number of pieces of tension data included in each segment ΔL is, for example, 200. Effects of this will also be described later in "J. Evaluation experiment".

The preprocessing unit 151 does not necessarily have to execute the preprocessing. The preprocessing unit 151 may execute both the preprocessing shown in FIG. 12 and the preprocessing shown in FIG. 13, or may execute only one type of the preprocessing.

Furthermore, the preprocessing unit 151 may execute preprocessing that is different from the preprocessing shown in FIGS. 12 and 13. For example, the preprocessing unit 151 may execute trend removal processing on the normal tension waveform defined by the training data 123. Examples of the trend removal processing include processing of calculating a logarithm of each tension value included in time series in the normal tension waveform, processing of calculating a square root for each tension value, and processing of subtracting a moving average from each tension value.

### (G2. Training unit 152)

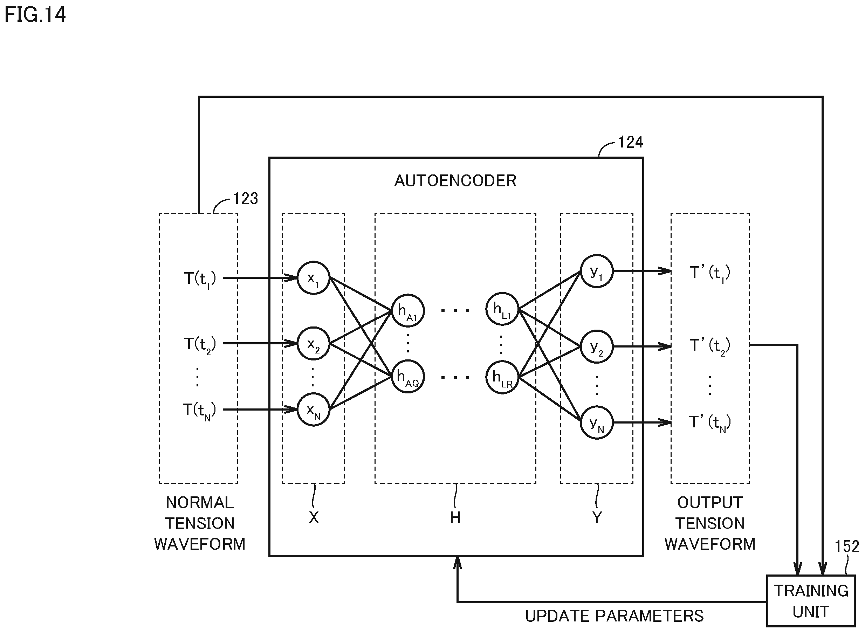

Next, the following describes functions of the training unit 152 shown in FIG. 11 with reference to FIG. 14. FIG. 14 is a diagram conceptually illustrating training processing executed by the training unit 152.

The training unit 152 executes training processing for generating the autoencoder 124 from normal tension waveforms. The normal tension waveforms are, for example, waveforms that have been preprocessed by the preprocessing unit 151. There is no particular limitation on a machine learning algorithm adopted for the training processing, and a neural network such as deep learning may be adopted, for example. The following describes training processing that uses a neural network.

As shown in FIG. 14, the autoencoder 124 includes an input layer X, an intermediate layer H, and an output layer Y.

The input layer X is configured to accept input of a normal tension waveform that has been preprocessed by the preprocessing unit 151. The input layer X includes, for example, N units x₁ to x_{N} (N is a natural number). The number of units constituting the input layer X is the same as the number of dimensions of the input tension waveform. For example, if the input tension waveform is N-dimensional data, the input layer X includes N units. Each unit constituting the input layer X outputs input data to each unit of the first layer included in the intermediate layer H.

The intermediate layer H includes one or more layers. In the example shown in FIG. 14, the intermediate layer H is constituted by L layers (L is a natural number). Each layer of the intermediate layer H includes a plurality of units. The number of units included in each layer of the intermediate layer H may be the same or different. In the example shown in FIG. 14, the first layer of the intermediate layer H includes Q units h_{A1} to h_{AQ} (Q is a natural number). The final layer of the intermediate layer H includes R units h_{L1} to h_{LR} (R is a natural number).

Each unit constituting each layer of the intermediate layer H is connected to each unit of the previous layer and each unit of the next layer. Each unit of each layer receives an output value from each unit of the previous layer, multiplies each output value by a weight, integrates the results of the multiplication, adds a predetermined bias to the integrated result (or subtracts a predetermined bias from the integrated result), inputs the added result (or subtracted result) to a predetermined function (e.g., sigmoid function), and outputs an output value of the function to each unit of the next layer.

In the autoencoder 124, each layer of the intermediate layer H is constituted by units fewer than the units that constitute the input layer X. As a result, the number of dimensions of the tension waveform is compressed during transmission from the input layer X to the intermediate layer H.

The output layer Y is configured to restore the tension waveform compressed by the intermediate layer H. More specifically, the output layer Y is constituted by the same number of units as the units constituting the input layer X. For example, if the input layer X is constituted by N units, the output layer Y is constituted by N units. In the example shown in FIG. 14, the output layer Y is constituted by N units y₁ to y_{N}. Hereinafter, the units y₁ to y_{N} will also be referred to as "units y".

Each unit y is connected to each of the units h_{L1} to h_{LR} of the final layer of the intermediate layer H. Each unit y receives an output value from each unit of the final layer of the intermediate layer H, multiplies each output value by a weight, integrates the results of the multiplication, adds a predetermined bias to the integrated result (or subtracts a predetermined bias from the integrated result), inputs the added result (or subtracted result) to a predetermined function (e.g., sigmoid function), and outputs an output result of the function as an output value.

Next, the following describes processing executed by the training unit 152 to update internal parameters of the autoencoder 124.

The training unit 152 inputs a first normal tension waveform T(t) to the autoencoder 124. The autoencoder 124 compresses the tension waveform T(t) and restores the tension waveform T(t) as a tension waveform T'(t) of the same dimension. Then, the training unit 152 calculates an error "Z" between the input tension waveform T(t) and the output tension waveform T'(t). For example, the error "Z" is calculated based on the following equation (1).$Z = \left\{{\left(T\left({t}_{1}\right)-T′\left({t}_{1}\right)\right)}^{2}+…+{\left(T\left({t}_{N}\right)-T′\left({t}_{N}\right)\right)}^{2}\right\} / N$

Next, the training unit 152 updates the internal parameters (e.g., weights and biases) of the autoencoder 124 so as to reduce the error "Z". Updating of the internal parameters is realized by backpropagation, for example.

The training unit 152 repeatedly executes the processing for updating the internal parameters of the autoencoder 124 for each normal tension waveform to be learned. Thus, the autoencoder 124 is trained to compress a normal tension waveform and then restore the normal tension waveform. That is to say, if a normal tension waveform is input, the autoencoder 124 outputs a tension waveform similar to the normal tension waveform, and if an abnormal tension waveform is input, the autoencoder 124 outputs a tension waveform different from the abnormal tension waveform. In other words, the autoencoder 124 functions as a type of filter that allows a normal tension waveform to pass therethrough but does not allow an abnormal tension waveform to pass therethrough.

### (G3. Preprocessing unit 153)

Next, the following describes functions of the preprocessing unit 153 shown in FIG. 11.

The preprocessing unit 153 executes various types of preprocessing (second preprocessing) on an input tension waveform obtained from the tension sensor 63 described above. Typically, the preprocessing unit 153 executes the same preprocessing as that executed by the preprocessing unit 151 described above.

As an example, the preprocessing unit 153 executes preprocessing by calculating an average value of the input tension waveform and subtracting the calculated average value from the input tension waveform. Since this preprocessing is as described with reference to FIG. 12, the description thereof will not be repeated.

As another example, the preprocessing unit 153 executes preprocessing by dividing the input tension waveform into segments each having a given length. Since this processing is as described with reference to FIG. 13, the description thereof will not be repeated.

### (G4. Estimation unit 154)

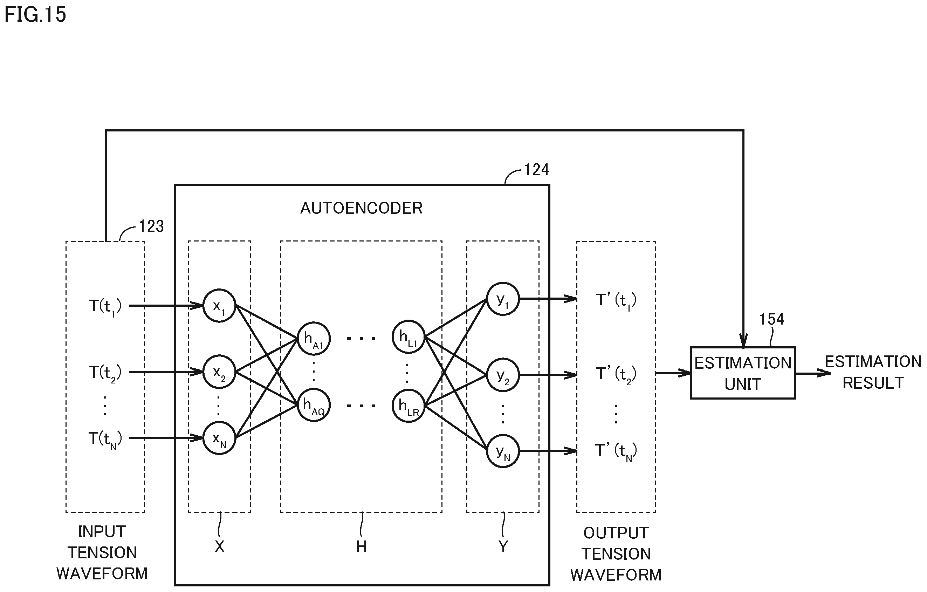

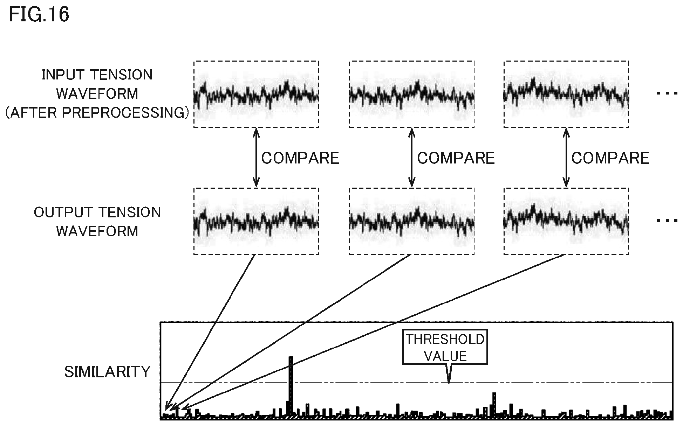

Next, the following describes functions of the estimation unit 154 shown in FIG. 11 with reference to FIGS. 15 and 16. FIG. 15 is a diagram conceptually illustrating estimation processing executed by the estimation unit 154.

The estimation unit 154 estimates the probability of occurrence of dyeing unevenness in a fully drawn yarn produced by the yarn drawing device 3 based on a degree of similarity between an input tension waveform preprocessed by the preprocessing unit 153 described above and an output tension waveform obtained by inputting the input tension waveform to the autoencoder 124.

More specifically, first, the estimation unit 154 obtains the autoencoder 124, and inputs an input tension waveform preprocessed by the preprocessing unit 153 to the autoencoder 124. The autoencoder 124 may be obtained from a storage device included in the control unit 8 or an external device. In response to input of the input tension waveform, the autoencoder 124 outputs an output tension waveform. At this time, if the input tension waveform is a normal tension waveform, the autoencoder 124 outputs a tension waveform similar to the normal tension waveform, and if the input tension waveform is an abnormal tension waveform, the autoencoder 124 outputs a tension waveform different from the abnormal tension waveform.

Thereafter, the estimation unit 154 calculates a degree of similarity between the input tension waveform and the output tension waveform. A suitable algorithm is adopted as a method for calculating the degree of similarity. Examples of algorithms that can be adopted to calculate the degree of similarity include mean squared error (MSE), sum of squared difference (SSD), sum of absolute difference (SAD), normalized cross-correlation (NCC), and zero-mean normalized cross-correlation (ZNCC).

The magnitude relationship of the calculated degree of similarity may vary according to the adopted algorithm. That is to say, the value of the calculated degree of similarity may become larger when the input tension waveform and the output tension waveform are more similar to each other, or may become smaller when the input tension waveform and the output tension waveform are more similar to each other.

FIG. 16 is a diagram showing a relationship between degrees of similarity between an input tension waveform and an output tension waveform and a threshold value. The degrees of similarity shown in FIG. 16 are calculated using the mean squared error. In the mean squared error, the more the input tension waveform and the output tension waveform are similar to each other, the smaller the calculated degree of similarity becomes. In other words, the greater the difference between the input tension waveform and the output tension waveform is, the larger the calculated degree of similarity becomes.

The degrees of similarity are calculated for respective segments of the given length of the input tension waveform divided in the preprocessing executed by the preprocessing unit 153. Among the calculated degrees of similarity, if the number of degrees of similarity exceeding the threshold value determined in advance is equal to or larger than a predetermined number, the estimation unit 154 determines that the probability of occurrence of dyeing unevenness is high and outputs an estimation result indicating an abnormality. On the other hand, among the calculated degrees of similarity, if the number of degrees of similarity exceeding the threshold value determined in advance is smaller than the predetermined number, the estimation unit 154 determines that the probability of occurrence of dyeing unevenness is low and outputs an estimation result indicating normality.

The threshold value may be set in advance or may be set suitably by the user. Also, the predetermined number may be set in advance or may be set suitably by the user. For example, the predetermined number is set to "1".

The result of estimation performed by the estimation unit 154 may be output in any manner. As an example, the estimation result is displayed as a message on the display 70 described above. As another example, the estimation result may be output using audio. As yet another example, the estimation result may be stored as a log in a storage device included in the control unit 8.

Also, the result of estimation performed by the estimation unit 154 may have suitable granularity. For example, the estimation result is output as either of two values, i.e., a normal estimation result indicating a low probability of occurrence of dyeing unevenness and an abnormal estimation result indicating a high probability of occurrence of dyeing unevenness. As another example, the estimation result may be output as a numerical value indicating the probability of occurrence of dyeing unevenness.

### <H. Flowchart relating to training processing>

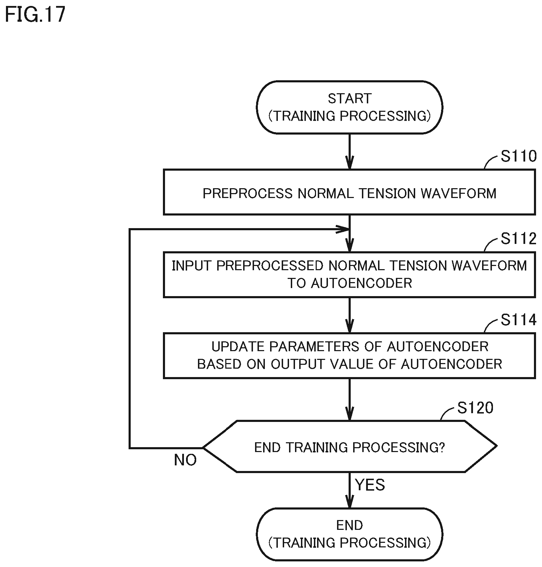

Next, the following describes a flowchart relating to the training processing executed by the control unit 8 with reference to FIG. 17. FIG. 17 is a flowchart showing the flow of the training processing.

The processor 101 of the control unit 8 executes various types of processing shown in FIG. 17 by executing the training program 126 described above (see FIG. 9). In another aspect, part or all of the processing shown in FIG. 17 may be executed by circuit elements or other hardware.

In step S110, the processor 101 functions as the preprocessing unit 151 described above (see FIG. 11) and executes predetermined preprocessing on a normal tension waveform defined by each piece of the training data 123. Since the preprocessing is as described above, the description thereof will not be repeated.

In step S112, the processor 101 inputs the normal tension waveform preprocessed in step S110 to the autoencoder 124 described above.

In step S114, the processor 101 functions as the training unit 152 described above (see FIG. 11), calculates an error between the normal tension waveform input to the autoencoder 124 and an output tension waveform output from the autoencoder 124, and updates internal parameters of the autoencoder 124 such that the error becomes smaller than the current error. The parameters are updated by backpropagation, for example. Since the training processing in step S114 is as described above, the description thereof will not be repeated.

In step S120, the processor 101 determines whether or not to end the training processing. For example, the processor 101 determines to end the training processing if the accuracy of estimation performed using test data is higher than desired accuracy. Alternatively, when the number of times the internal parameters of the autoencoder 124 have been updated has exceeded a predetermined number, the processor 101 determines to end the training processing.

Upon determining to end the training processing (YES in step S120), the processor 101 ends the processing shown in FIG. 17. Otherwise (NO in step S120) the processor 101 returns the control to step S112.

### <I. Flowchart relating to estimation processing>

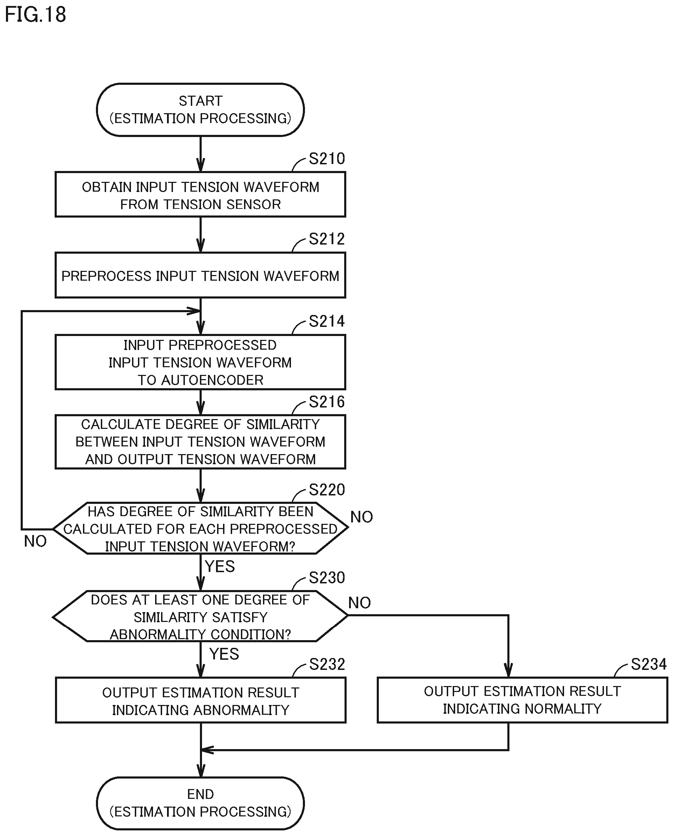

Next, the following describes a flowchart relating to the estimation processing executed by the control unit 8 with reference to FIG. 18. FIG. 18 is a flowchart showing the flow of the estimation processing.

The processor 101 of the control unit 8 executes various types of processing shown in FIG. 18 by executing the estimation program 128 described above (see FIG. 9). In another aspect, part or all of the processing shown in FIG. 18 may be executed by circuit elements or other hardware.

In step S210, the processor 101 obtains an input tension waveform showing a transition of tension regarding a fully drawn yarn Yd that is the target of the estimation. The input tension waveform is obtained from, for example, the tension sensor 63 described above.

In step S212, the processor 101 functions as the preprocessing unit 153 described above (see FIG. 11) and executes predetermined preprocessing on the input tension waveform obtained in step S210. As an example, the processor 101 executes preprocessing by calculating an average value of the input tension waveform and subtracting the calculated average value from the input tension waveform. As another example, the processor 101 executes preprocessing by dividing the input tension waveform into segments ΔL (see FIG. 13).

In step S214, the processor 101 inputs the input tension waveform preprocessed in step S212 to the autoencoder 124 described above.

In step S216, the processor 101 functions as the estimation unit 154 described above (see FIG. 11) and calculates the degree of similarity between the input tension waveform input to the autoencoder 124 and an output tension waveform output from the autoencoder 124.

In step S220, the processor 101 determines whether or not the degree of similarity has been calculated for all segments ΔL of the given length of the input tension waveform divided in the preprocessing performed in step S212. Upon determining that the degree of similarity has been calculated for all the segments of the input tension waveform (YES in step S220), the processor 101 switches the control to step S230. Otherwise (NO in step S230) the processor 101 returns the control to step S214.

In step S230, the processor 101 functions as the estimation unit 154 described above and determines whether or not at least one of the degrees of similarity calculated in step S216 satisfies an abnormality condition. The abnormality condition is satisfied if the input tension waveform is not similar to the output tension waveform. For example, the abnormality condition is satisfied if one of the calculated degrees of similarity exceeds a predetermined threshold value. Upon determining that at least one of the degrees of similarity calculated in step S216 satisfies the abnormality condition (YES in step S230), the processor 101 switches the control to step S232. Otherwise (NO in step S230) the processor 101 switches the control to step S234.

In step S232, the processor 101 functions as the estimation unit 154 described above and outputs an abnormal estimation result indicating a high probability of occurrence of dyeing unevenness.

In step S234, the processor 101 functions as the estimation unit 154 described above and outputs a normal estimation result indicating a low probability of occurrence of dyeing unevenness.

### <J. Evaluation experiment>

As described above with reference to FIG. 13, the preprocessing units 151 and 153 execute preprocessing for dividing a tension waveform into segments ΔL of a given length. The inventor found a preferred value for the segments ΔL through an evaluation experiment.

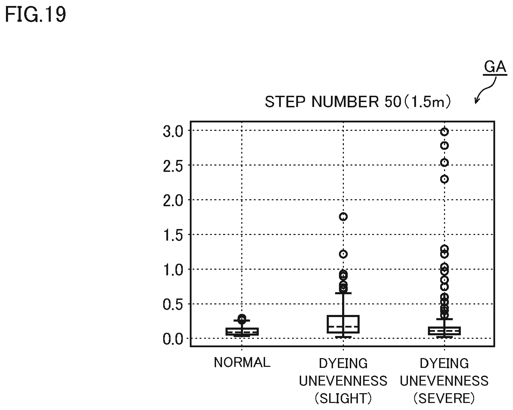

The following describes the evaluation experiment with reference to FIGS. 19 to 23. FIGS. 19 to 23 are diagrams showing results of the evaluation experiment as graphs GA to GE.

### (J1. Experimental conditions)

First, the conditions of the experiment conducted by the inventor will be described.

The inventor prepared five normal tension waveforms (hereinafter also referred to as "first tension waveforms") for which dyeing unevenness did not occur, two normal tension waveforms (hereinafter also referred to as "second tension waveforms") for which slight dyeing unevenness occurred, and two normal tension waveforms (hereinafter also referred to as "third tension waveforms") for which severe dyeing unevenness occurred. Thereafter, the inventor conducted the evaluation experiment in accordance with the following procedures (1) to (4).
(1) Preprocessing for dividing each of the first tension waveforms into segments ΔL was executed, and the autoencoder 124 described above was generated using the preprocessed first tension waveforms.
(2) Preprocessing for dividing each of the first to third tension waveforms into segments ΔL was executed, and the preprocessed first to third tension waveforms were input to the autoencoder 124.
(3) Degrees of similarity between the input tension waveforms input to the autoencoder 124 and output tension waveforms output from the autoencoder 124 were calculated, and the degrees of similarity were converted into box whisker diagrams and plotted in the graphs GA to GE.
(4) The above procedures (1) to (3) were repeated by changing the length of each segment ΔL.

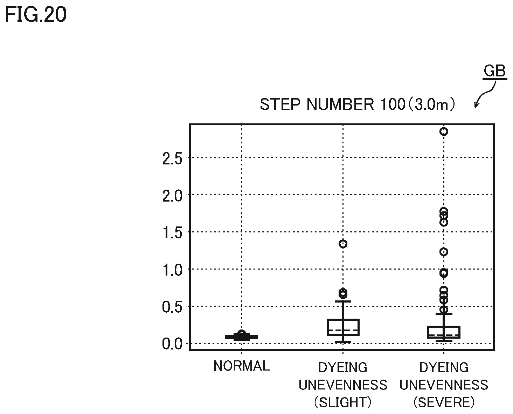

In the examples shown in FIGS. 19 and 20, the length of each segment ΔL is shown as the STEP number. The STEP number corresponds to the number of pieces of tension data included in each segment ΔL. The inventor conducted the evaluation experiment by changing the STEP number to "50", "100", and "200" in the above procedure (4).

### (J2. Graphs GA to GE)

Next, the meanings of the graphs GA to GE shown in FIG. 19 to FIG. 21 will be described.

The graph GA shown in FIG. 19 shows experimental results of the case where the STEP number was "50". The STEP number "50" corresponds to a length of 1.5 m of a fully drawn yarn Yd.

The graph GB shown in FIG. 20 shows experimental results of the case where the STEP number was "100". The STEP number "100" corresponds to a length of 3.0 m of a fully drawn yarn Yd.

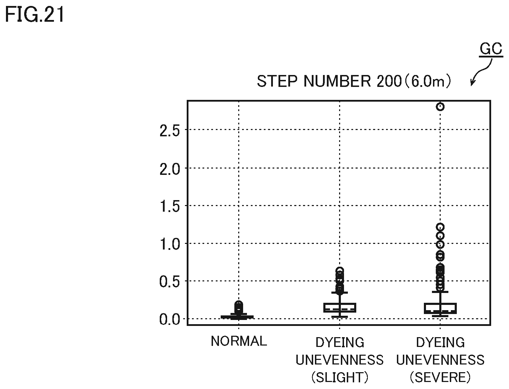

The graph GC shown in FIG. 21 shows experimental results of the case where the STEP number was "200". The STEP number "200" corresponds to a length of 6.0 m of a fully drawn yarn Yd.

The vertical axes of the graphs GA to GC show the degrees of similarity calculated in the above procedure (3). "Normal" on the horizontal axes of the graphs GA to GC shows experimental results of the first tension waveforms described above. "Dyeing unevenness (slight)" on the horizontal axes of the graphs GA to GC shows experimental results of the second tension waveforms described above. "Dyeing unevenness (severe)" on the horizontal axes of the graphs GA to GC shows experimental results of the third tension waveforms described above.

The lower limit of each box shown in the graphs GA to GC corresponds to the 1/4-th value (first quartile) from the lowest degree of similarity when the degrees of similarity are arranged in ascending order. The dashed line within each box shown in the graphs GA to GC corresponds to the 1/2-th value (median) from the lowest degree of similarity when the degrees of similarity are arranged in ascending order. The upper limit of each box shown in the graphs GA to GC corresponds to the 3/4-th value (third quartile) from the lowest degree of similarity when the degrees of similarity are arranged in ascending order.

Also, the upper limit of whiskers shown in the graphs GA to GC corresponds to "first quartile - interquartile range×1.5". The lower limit of the whiskers shown in the graphs GA to GC corresponds to "third quartile + interquartile range×1.5". The interquartile range corresponds to "third quartile - first quartile". Plot points shown in the graphs GA to GC show "outliers" that are not within the whisker range.

### (J3. Analysis results)

Next, results of analysis of the graphs GA to GC will be described.

As shown in the graphs GA to GC, when the STEP number was 200 or less, the distribution of the degrees of similarity for "normal" was narrower than the distributions of the degrees of similarity for "dyeing unevenness (slight)" and "dyeing unevenness (severe)". Further, the number of outliers of the degrees of similarity for "normal" was smaller than the numbers of outliers of the degrees of similarity for "dyeing unevenness (slight)" and "dyeing unevenness (severe)". That is to say, if the STEP number is set to 200 or less, characteristics of waveforms relating to dyeing unevenness can be obtained more reliably and the probability of occurrence of dyeing unevenness can be estimated more accurately.

The STEP number is preferably set to, for example, about several times to about 10 times (about 1 to 5 m) the length of dyeing abnormalities (several tens of centimeters). More preferably, the STEP number is set to 100 or less. Further preferably, the STEP number is set to 50 or less.

### <K. First modification example>

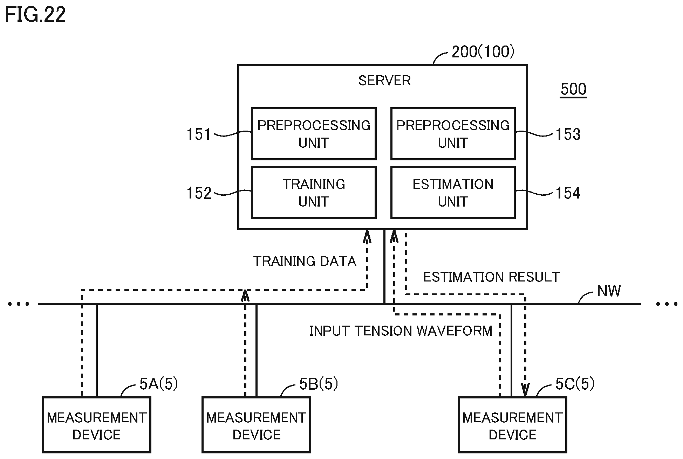

Next, a first modification example of the above embodiment will be described with reference to FIG. 22. FIG. 22 is a diagram showing an example of a device configuration of an information processing system 500 according to this modification example.

It should be noted that, in the drawings referred to below, members that are identical with or similar to the members described in the above embodiment are denoted with the same reference numerals as those used in the above embodiment, and descriptions thereof may be omitted in the following description.

In the example shown in FIG. 11 described above, the functional units such as the preprocessing unit 151, the training unit 152, the preprocessing unit 153, and the estimation unit 154 are implemented in the control unit 8 of the measurement device 5. However, these functional units need not necessarily be implemented in the control unit 8. For example, some or all of these functional units may be implemented in a server 200 that is an example of the information processing device 100.

As shown in FIG. 22, the information processing system 500 includes one or more measurement devices 5 and one or more servers 200. In the example shown in FIG. 22, the information processing system 500 is constituted by three measurement devices 5A to 5C and one server 200. Hereinafter, when the measurement devices 5A to 5C are not particularly distinguished, the measurement devices 5A to 5C will be referred to as the "measurement devices 5".

The measurement devices 5 and the server 200 are connected to the same network NW and are configured to be capable of communicating with each other. The measurement devices 5 and the server 200 may be communicatively connected by wire or wirelessly.

The server 200 is a desktop personal computer, a notebook personal computer, a tablet terminal, or another information processing terminal. In the example shown in FIG. 22, the preprocessing unit 151, the training unit 152, the preprocessing unit 153, and the estimation unit 154 are implemented in the server 200.

The server 200 collects the training data 123 described above (see FIG. 10) from the measurement devices 5 (e.g., the measurement devices 5A and 5B) connected to the network NW. Next, the training unit 152 of the server 200 executes training processing by using the training data 123 that has been preprocessed by the preprocessing unit 151, and generates the autoencoder 124 described above. Since the training processing is as described above, the description thereof will not be repeated.

Thereafter, the server 200 receives an input tension waveform measured by the measurement device 5C. Next, the estimation unit 154 of the server 200 inputs the input tension waveform that has been preprocessed by the preprocessing unit 153 to the autoencoder 124. Next, the estimation unit 154 of the server 200 estimates the probability of occurrence of dyeing unevenness in the fully drawn yarn based on a degree of similarity between the input tension waveform and an output tension waveform obtained from the autoencoder 124. Since the estimation processing is as described above, the description thereof will not be repeated. Thereafter, the server 200 transmits the estimation result to the measurement device 5C.

### <L. Second modification example>

Next, a second modification example of the above embodiment will be described with reference to FIG. 23. FIG. 23 is a diagram showing a yarn take-up device 1a according to the second modification example.

Although the tension sensor 63 is disposed inside the measurement unit 6 in the example shown in FIG. 2 described above, the position of the tension sensor 63 is not limited to the inside of the measurement unit 6. For example, as shown in FIG. 23, a tension sensor 51 may be disposed inside the yarn take-up device 1a. Since matters other than the position of the tension sensor 51 are as described above, descriptions thereof will not be repeated in the following description.

The yarn take-up device 1a according to this modification example includes the plurality of godet rollers 31 to 35. As described above, the three godet rollers 31 to 33 located on the upstream side in the yarn traveling direction are preheating rollers for heating yarns Y prior to being drawn. On the other hand, the two godet rollers 34 and 35 located on the downstream side in the yarn traveling direction are heat setting rollers used for heat setting of the plurality of yarns Y that have been drawn.

The tension sensor 51 is disposed to measure the tension of the fully drawn yarns Yd traveling between the godet rollers 31 to 33, which are the preheating rollers, and the godet roller 35, which is located on the most downstream side in the yarn traveling direction out of the godet rollers 34 and 35 serving as the heat setting rollers. In the example shown in FIG. 23, the tension sensor 51 is disposed between the godet roller 34 and the godet roller 35 to measure the tension of the fully drawn yarns Yd heated by the godet rollers 34 and 35 serving as the heat setting rollers.

The yarn feeding speed of the godet rollers 34 and 35 is set such that the fully drawn yarns Yd between the godet roller 34 and the godet roller 35 are not slackened and not stretched, or are stretched by an amount of deformation within the elastic range.

When the tension sensor 51 is provided inside the yarn take-up device 1a, the information processing device 100 described above can obtain an input tension waveform for estimating the probability of occurrence of dyeing unevenness in the process of producing the fully drawn yarns Yd. This makes it possible to shorten the time required for estimating the probability of occurrence of dyeing unevenness.

### <M. Third modification example>

Next, a third modification example of the above embodiment will be described with reference to FIG. 24. FIG. 24 is a diagram showing a yarn take-up device 1b according to the third modification example.

In the example shown in FIG. 23, the tension sensor 51 is provided between the godet roller 34 and the godet roller 35, but the tension sensor 51 may be disposed at a different position.

More specifically, in the yarn take-up device 1b according to this modification example, the tension sensor 51 and a heater 52 are provided between the guide roller 13 and the guide roller 14. The tension sensor 51 is disposed to measure the tension of the fully drawn yarns Yd traveling between the guide roller 13 (first roller) and the guide roller 14 (second roller). Further, the heater 52 is configured to heat the fully drawn yarns Yd spanning between the guide rollers 13 and 14.

The tension sensor 51 measures the tension of the fully drawn yarns Yd in the state of being heated by the heater 52. The yarn feeding speed of the guide rollers 13 and 14 is set such that the fully drawn yarns Yd between the guide roller 13 and the guide roller 14 are not slackened and not stretched, or are stretched by an amount of deformation within the elastic range.

The embodiments disclosed here are illustrative in all aspects, and should not be construed as limiting. The scope of the present invention is indicated not by the above description but by the claims, and all changes which come within a scope and meanings equivalent to the claims are intended to be embraced therein.

### List of Reference Numerals

- 3: Yarn drawing device
- 5: Measurement device
- 31 to 33: Godet roller (preheating roller)
- 34, 35: Godet roller (heat setting roller)
- 51: Tension sensor
- 52: Heater
- 62: First yarn feeding roller pair (first roller)
- 63: Tension sensor
- 64: Heater
- 65: Second yarn feeding roller pair (second roller)
- 100: Information processing device
- 101: Processor
- 124: Autoencoder
- 128: Estimation program
- Yd: Fully drawn yarn
- ΔL: Segment

## Claims

1. An estimation program that enables estimation of a probability of occurrence of dyeing unevenness in a fully drawn yarn produced by a yarn drawing device that draws a yarn while heating the yarn, the estimation program causing an information processing device to execute:
a step of obtaining an autoencoder trained to compress a normal tension waveform showing a normal transition of tension of a fully drawn yarn that is different from the fully drawn yarn produced by the yarn drawing device, and then restore the normal tension waveform;
a step of obtaining an input tension waveform showing a transition of tension of the fully drawn yarn produced by the yarn drawing device; and
a step of estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.

2. The estimation program according to claim 1,
wherein the estimation program further causes the information processing device to execute a training step of generating the autoencoder using the normal tension waveform.

3. The estimation program according to claim 2,
wherein the training step includes:
a step of executing first preprocessing on the normal tension waveform; and
a step of generating the autoencoder from the normal tension waveform subjected to the first preprocessing, and
the step of estimating includes:
a step of executing second preprocessing on the input tension waveform; and
processing for inputting the input tension waveform subjected to the second preprocessing to the autoencoder.

4. The estimation program according to claim 3,
wherein the first preprocessing includes processing for subtracting an average value of the normal tension waveform from the normal tension waveform, and
the second preprocessing includes processing for subtracting an average value of the input tension waveform from the input tension waveform.

5. The estimation program according to claim 3 or 4,
wherein the first preprocessing includes processing for dividing the normal tension waveform into segments each having a given length; and
the second preprocessing includes processing for dividing the input tension waveform into segments each having the given length.

6. The estimation program according to claim 5,
wherein each segment having the given length corresponds to a length of 6.0 m or less of the fully drawn yarn.

7. An information processing device capable of estimating a probability of occurrence of dyeing unevenness in a fully drawn yarn produced by a yarn drawing device that draws a yarn while heating the yarn, the information processing device comprising a processor for controlling the information processing device,
wherein the processor executes:
processing for obtaining an autoencoder trained to compress a normal tension waveform showing a normal transition of tension of a fully drawn yarn that is different from the fully drawn yarn produced by the yarn drawing device, and then restore the normal tension waveform;
processing for obtaining an input tension waveform showing a transition of tension of the fully drawn yarn produced by the yarn drawing device; and
processing for estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.

8. The information processing device according to claim 7,
wherein the input tension waveform is measured by a measurement device different from the yarn drawing device, and
the measurement device includes:
a first roller and a second roller configured to allow a yarn to span therebetween;
a heater that is disposed between the first roller and the second roller and configured to heat a yarn spanning between the first roller and the second roller; and
a tension sensor that is disposed to measure tension of the fully drawn yarn traveling between the first roller and the second roller.

9. The information processing device according to claim 7,
wherein the yarn drawing device further includes:
a preheating roller configured to heat a yarn prior to being drawn;
one or more heat setting rollers disposed downstream of the preheating roller in a yarn traveling direction and configured to heat the yarn at a temperature higher than a temperature at which the yarn is heated by the preheating roller and feed the yarn at a yarn feeding speed higher than a yarn feeding speed of the preheating roller; and
a tension sensor disposed to measure tension of the fully drawn yarn traveling between the preheating roller and a heat setting roller located most downstream in the yarn traveling direction among the one or more heat setting rollers.

10. The information processing device according to claim 7,
wherein the yarn drawing device further includes:
a first roller and a second roller configured to allow a yarn to span therebetween;
a heater that is disposed between the first roller and the second roller and configured to heat a yarn spanning between the first roller and the second roller; and
a tension sensor that is disposed to measure tension of the fully drawn yarn traveling between the first roller and the second roller.

11. An estimation method that enables estimation of a probability of occurrence of dyeing unevenness in a fully drawn yarn produced by a yarn drawing device that draws a yarn while heating the yarn, the estimation method comprising:
a step of obtaining an autoencoder trained to compress a normal tension waveform showing a normal transition of tension of a fully drawn yarn that is different from the fully drawn yarn produced by the yarn drawing device, and then restore the normal tension waveform;
a step of obtaining an input tension waveform showing a transition of tension of the fully drawn yarn produced by the yarn drawing device; and
a step of estimating the probability of occurrence of dyeing unevenness in the fully drawn yarn produced by the yarn drawing device based on a degree of similarity between the input tension waveform and an output tension waveform obtained from the autoencoder by inputting the input tension waveform to the autoencoder.
